# EUROPÄISCHE PATENTSCHRIFT

(11) **EP 2 574 826 B1**
(45) Veröffentlichungstag und Bekanntmachung des Hinweises auf die Patenterteilung: **26.02.2014**
(21) Anmeldenummer: 11183508.8
(22) Anmeldetag: 30.09.2011
(51) Int. Cl.: F16H 57/04

(54) **Kupplungsbaugruppe mit Ölstauvorrichtung**
Coupling assembly with oil stowage device
Composant d'embrayage doté d'un dispositif de retenue d'huile

(43) Veröffentlichungstag der Anmeldung: 03.04.2013
(73) Patentinhaber: GKN Driveline Köping AB, 731 36 Köping (SE)
(72) Erfinder: Nett, Hans-Peter, 53518 Adenau (DE); Göttert, Christoph, 50670 Köln (DE)
(74) Vertreter: Tersteegen, Felix

(56) Entgegenhaltungen:
- EP-A2- 0 875 690
- DE-A1- 1 801 917
- DE-A1-102008 002 844
- US-B1- 6 345 712
- US-B1- 6 474 444

## Beschreibung

Die Erfindung betrifft eine Kupplungsbaugruppe eines Kraftfahrzeugs für die Weiterleitung von Antriebsleistung auf ein Rad einer Achse, insbesondere eine kupplungsgesteuerte Ausgleichseinheit, mit einer schaltbaren Kupplungseinrichtung, die Antriebsleistung von einem in Bezug auf die Kupplungsvorrichtung antriebsseitigen Antriebsglied auf ein in Bezug auf die Kupplungsvorrichtung abtriebsseitiges Antriebsglied zu übertragen vermag, wobei eine Ölfördereinrichtung für die Kupplungsbeölung und die Beölung von in Bezug auf die Kupplung abtriebsseitigen Bauteilen vorgesehen ist, wobei die Ölfördereinrichtung in Bezug auf die Kupplung antriebsseitig angeordnet ist und betriebszustandsabhängig Öl eines die Kupplungsvorrichtung bedienenden Ölkreislaufs fördert oder still steht.

Eine Kupplungsbaugruppe dieser Art ist aus der DE 10 2008 002 844 A1 bekannt. In einer differentiallosen, kupplungsgesteuerten Ausgleichseinheit ist für eine Seitenwelle, die die in Bezug auf die Kupplungsvorrichtung abtriebsseitige Welle bildet, eine Kupplungsbaugruppe mit einer ansteuerbaren Lamellenkupplung vorgesehen, über die die Antriebsleistung dem angeschlossenen Antriebsrad eines Kraftfahrzeugs im Bedarfsfall zugeleitet wird. Der Außenlamellenträger der Lamellenkupplung, der mit der antriebsseitigen Welle gekoppelt ist, fördert Schmier- bzw. Kühlöl in eine in einem Gehäuse der Kupplungsbaugruppe vorgesehene Ölfördertasche, von wo das Öl in einen vom Gehäuse gebildeten Sumpf zurückfließt, erneut von der Kupplung erfasst wird und dem Kreislauf wieder zugeführt wird. Bezogen auf ein Lamellenpaket einer Seitenwellenkupplung bildet sich also ein innerer Ölkreislauf aus.

Wegen dieses inneren Ölkreislaufs verweilt ein großer Teil des zur Kühlung und Schmierung aufgewendeten Ölvolumens lange in dem beschriebenen inneren Ölkreislauf, ohne dass sich das Ölvolumen ausreichend mit "frischem" ÖL vermischt oder durch dieses ersetzt werden würde. Ölvolumen, das gerade erst zwischen den Kupplungslamelten Wärme aufgenommen hat, wird unmittelbar wieder zu den Lamellen zurückgeführt. Die Kupplungstemperatur steigt daher überproportionalzu der Kühlleistung, die mit der in der Ausgleichseinheit vorhandenen Ölmenge erreichbar wäre. Die überproportionale Erwärmung der Kupplungen bringt Nachteile hinsichtlich des Verschleißverhaltens und somit der Lebensdauer sowie hinsichtlich des Ansprech- und Regelverhaltens mit sich.

Ein weiterer Nachteil der in der DE 10 2008 002 844 A1 gezeigten Ausführung ist, dass die Kupplungspakete der Seitenwellenkupplungen dauerhaft im Öl stehen, um dieses zu erfassen und zur Ölauffangtasche zu fördern. Die hiermit einhergehenden Planschverluste erhöhen die Verlustleistung des Antriebstrangs.

Hinsichtlich der unerwünschten Verlustleistung kommt hinzu, dass selbst in dem in der DE 10 2008 002 844 A1 beschriebenen Fall, dass der Sekundärteil des Antriebsstrangs von den Antriebsrädern entkoppelt ist und die Seitenwellenkupplungen vollständig geöffnet sind, die Sekundärantriebsräder im Fahrbetrieb auf der Straße abrollen und den Innenlamellenträger und die damit drehfest verbundenen Innenlamellen schleppen. Die Innenlamellen stehen jedoch in ständigem Kontakt mit dem Öl, da sie darin eintauchen. Nicht nur der Bereich des äußerst schmalen Lüftspalts (Spaltbreite ca. 0,1 mm) zwischen Innen- und Außenlamellen, der sich unmittelbar im Öl befindet, ist mit Öl gefüllt, sondern das Öl wird zudem durch die rotierenden Innenlamellen auch in den nicht im Öl stehenden Zwischenraum zwischen Innen- und Außenlamellen der Lamellenkupplung gefördert. Die in der Folge erzeugte Flüssigkeitsreibung bzw. hydrodynamische Reibung überträgt wiederum das von den Sekundärantriebsrädern auf die Innenlamellen wirkende Schleppmoment auf die Außenlamellen und treibt diese hierdurch an. Sobald diese aber zu rotieren beginnen, fördern sie ihrerseits wiederum Öl in den zuvor beschriebenen inneren Ölkreislauf und erhöhen ihrerseits somit das geförderte Ölvolumen und damit die Reib- bzw. Verlustleistung erneut. Der unerwünschte Effekt verstärkt sich bis zu einem gewissen Grad selbst.

Versuche haben gezeigt, dass aufgrund dieses Effekts der Sekundärantriebsstrang entgegen der in der DE 10 2008 002 844 A1 gemachten Annahmen auch dann nicht zum Stillstand kommt, wenn er vom Primärteil des Antriebsstrangs entkoppelt ist. Durch die in der DE 10 2008 002 844 A1 vorgeschlagene reibungsarme Ausgestaltung der Oberflächen der Innenlamellen lassen sich die negativen Auswirkungen dieses Effekts nur geringfügig verringern. Außerdem führen reibungsarme Oberflächen der Innenlamellen zu einem deutlich schlechteren Ansprech- und Regelverhalten des Kupplungspakets. Ein Nachteil, der schwerer wiegt als die bei der Verlustleistung durch diese Maßnahme erreichbaren Vorteile.

Ein weiterer Nachteil der in der DE 10 2008 002 844 A1 offenbarten Kupplungsbaugruppe ist, dass durch die Notwendigkeit, dass das Kühl- bzw. Schmieröl durch den Innenlamellenträger oder ein sonstiges in Bezug auf die Kupplungsvorrichtung abtriebsseitiges Antriebsglied hindurch treten muss, dieses konstruktiv aufwendig zu gestalten ist.

Vor diesem Hintergrund macht es sich die Erfindung zur Aufgabe, eine konstruktiv vereinfachte Kupplungsbaugruppe der eingangs genannten Art zur Verfügung zu stellen, bei der die vorstehend beschriebenen Nachteile vermieden werden. Insbesondere soll das in der DE 10 2008 002 844 A1 beschriebene Beölungskonzept hinsichtlich der Verlustleistung bei von einem Primärteil des Antriebstrangs entkoppeltem Sekundärteil des Antriebsstrangs optimiert werden, ohne Kompromisse beim Ansprech- und Regelverhalten der Kupplungspakete eingehen zu müssen und ohne die Funktionsfähigkeit sonstiger Bauteile negativ zu beeinflussen. Insbesondere soll gewährleistet sein, dass bei Abschaltung des Sekundärachsantriebsstrangs dieser vollständig still steht und trotz nicht fördernder Ölfördereinrichtung abtriebsseitig von der Kupplungsvorrichtung angeordnete Bauteile weiter mit Öl versorgt sind.

Diese Aufgabe wird dadurch gelöst, eine Ölstauvorrichtung vorgesehen ist, die die Schmierung von in Bezug auf die Kupplungsvorrichtung abbtriebsseitig angeordneten Bauteilen bei nicht fördernder Ölfördereinrichtung sicherzustellen vermag. Mit den in Bezug auf die Kupplungsvorrichtung abtriebsseitig angeordneten Bauteilen sind insbesondere solche Bauteile gemeint, die in einem Betriebszustand, in dem die Ölfördereinrichtung Öl für den Ölkreislauf fördert, in diesem Ölkreislauf angeordnet sind oder durch das von diesem Ölkreislauf zur Verfügung gestellte Öl bedient werden. Bevorzugt ist ein offenes Drehlager vorgesehen, dem eine Ölstauvorrichtung zugeordnet ist, die die Schmierung des Drehlagers bei nicht fördernder Ölfördereinrichtung sicherzustellen vermag.

Eine solche Ölstauvorrichtung staut in einem ersten Betriebszustand, in der die Ölfördereinrichtung Öl fördert, ein Teil des geförderten Öls und stellt es in einem zweiten Betriebszustand, in dem die Ölfördereinrichtung aufgrund einer Stilllegung kein Öl mehr fördert, Bauteilen zur Verfügung, die im ersten Betriebszustand durch das von der Ölfördereinrichtung zur Verfügung gestellte Öl bedient wurden und nach Stillegung der Ölfördereinrichtung nach wie vor Beölungsbedarf haben. Dieses Konzept ermöglicht die Absenkung oder Abschottung des Ölspiegels eines Ölreservoirs, aus dem sich die Ölfördereinrichtung bedient, gegenüber den genannten Bauteilen mit dauerhaftem Beölungsbedarf auch im zweiten Betriebszustand.

Das offene Drehlager, über das insbesondere die abtriebsseitige Welle oder der abtriebsseitige Lamellenträger an einem Gehäuse gelagert ist, ermöglicht, den Ölfluss des Ölkreislaufs, der die Kupplungsvorrichtung bedient, durch das offene Drehlager zu führen und dieses somit in den Ölkreislauf zu integrieren. Durch das die Kupptungsvorrichtung versorgende Öl wird also auch das Drehlager geschmiert und gekühlt. Hierdurch entfällt zum einen die Notwendigkeit, den Ölfluss - wie im Stand der Technik gezeigt - zum Beispiel durch einen Innenlamellenträger, die abtriebsseitige Welle oder einen sonstigen in Bezug auf Kupplungsvorrichtung insbesondere abtriebsseitiges Antriebsglied hindurch führen zu müssen. Zum anderen führt der Einsatz eines offenen Drehlagers im Vergleich zu einem geschlossenen Drehlager zu einer Reibungsverlustminimierung.

Die Kupplungsbaugruppe ist bevorzugt als Baugruppe einer differentiallosen oder dif ferentialbehafteten, kupplungsgesteuerten Ausgleichseinheit vorgesehen, die - wie in der DE 10 2008 002 844 A1 offenbart ist - einen Teil eines stilllegbaren Sekundärteils des Gesamtantriebsstrang bildet. Wenn die Ölfördereinrichtung an ein in Bezug auf die Kupplungseinrichtung antriebsseitiges Antriebsglied gekoppelt ist, insbesondere an die in Bezug auf die Kupplungsvorrichtung antriebsseitige Welle oder den antriebsseitigen Lamellenträger, dann führt die Stilllegung des Sekundärteils des Antriebsstrangs, der unter anderem durch das Öffnen der Kupplungsvorrichtung vollzogen wird, auch zu Stilllegung der Ölfördereinrichtung.

Einerseits ist dies gewollt, da hierdurch die von einer permanent mitlaufenden Ölfördereinrichtung ansonsten verursachte Verlustleistung bei Stilllegung des Sekundärteils des Antriebsstrangs eingespart werden kann. Außerdem kann hierdurch die Kupplungsvorrichtung, die sich bei stillgelegtem Sekundärteil des Antriebsstrangs in dauerhaft geöffnetem Zustand befindet, bei Umsetzung bestimmter konstruktiver Voraussetzungen, die noch erläutert werden, verlustfrei mitlaufen.

Andererseits kann die Unterbrechung der Beölung mit Blick auf das offene Drehlager durchaus Probleme mit sich bringen. Handelt es sich bei dem Drehlager, wie es bevorzugt der Fall ist, um ein in den Ölkreislauf integriertes Drehlager, das ein abtriebsseitiges Antriebsglied lagert, so dreht dieses auch bei geöffneter Kupplungsvorrichtung aufgrund der Tatsache, dass die auf der Straße abrollenden Räder die abtriebsseitige Antriebsglieder schleppen. Es bestünde daher die Gefahr, dass das Drehlager wegen der Unterbrechung der Ölförderung infolge der Entkopplung des Sekundärantriebsstrangs und der damit einhergehenden Stilllegung der Ölfördereinrichtung trockenläuft, wenn nicht eine Ölstauvorrichtung vorgesehen wäre, die das Drehlager auch bei nicht arbeitender Ölfördereinrichtung vor einem Trockenlaufen bewahrt.

Die Ölstauvorrichtung ist bevorzugt durch einen Ölstauring mit einer Ölstaukante gebildet und bildet mit angrenzenden Bauteilen, insbesondere mit Wandungsinnenseiten eines Gehäuses, in dem die Kupplungsbaugruppe gelagert ist, einen kleinen Ölsumpf aus, in dem das Drehlager läuft. Die Höhe der Ölstaukante ist derart bemessen, dass der Ölstand des Ölsumpfes die ausreichende Schmierung des Drehlagers auch bei stillgelegter Ölfördereinrichtung sicherstellt. Der Querschnitt der Ölstaueinrichtung ist bevorzugt L-förmig.

Die bevorzugte Kopplung der Ölfördereinrichtung an ein in Bezug auf die Kupplungsvorrichtung antriebsseitiges Antriebsglied kann auf verschiedene Weise erfolgen. Entweder ist die Ölfördereinrichtung unmittelbar an dem antriebsseitigen Antriebsglied angeordnet, wie es zum Beispiel bei der Nutzung eines unmittelbar an der antriebsseitigen Welle angeordneten Ölförderrads der Fall ist. Ein solches Ölförderrad kann beispielsweise von dem Tellerrad des Winkelgetriebes gebildet sein, das auf der Tellerradträgerwelle bzw. der Zwichenwelle, die die in Bezug auf die Kupplungsvorrichtung antriebsseitige Welle darstellt, angeordnet ist. Oder die Ölfördereinrichtung wird mittelbar, das heißt unter Zwischenschaltung weiterer Bauteile, die die für die Ölfördereinrichtung erforderliche Antriebsleistung von dem antriebsseitigen Antriebsglied zur Ölfördereinrichtung weiterleiten, angetrieben.

Die Ölfördereinrichtung ist bevorzugt entfernt von der Kupplungsvorrichtung angeordnet und insbesondere nicht unmittelbar von einem Außenlamellenträger einer als Lamellenkupplung ausgebildeten Kupplungsvorrichtung ausgebildet. Die Anordnung des Ölförderrades entfernt von der Kupplungsvorrichtung führt dazu, dass das Öl nach einem Durchlauf durch die zu beölende Kupplungsvorrichtung stets in einen von der Kupplungsvorrichtung entfernten Ölsumpf der Ausgleichseinheit zurückfließt, bevor es erneut in den Ölkreislauf eingespeist wird. Damit ist eine ausreichende Durchmischung des gesamten Ölvolumens und in der Folge die Ausnutzung der maximalen Kühlleistung der Gesamtölmenge jederzeit gewährleistet, was wiederum thermische Belastung der Kupplungsvorrichtungen verringert. Diese Ausgestaltung sorgt außerdem dafür, dass die Kupplungsvorrichtung geöffneter Kupplung und dadurch abgeschalteten Sekundärteil des Antriebsstrangs trockenlaufen kann und keine Kupplungslamellen dauerhaft im Öl stehen.

Die genannte Ausgestaltung ermöglicht es außerdem, die Ölfördereinrichtung, die insbesondere von einem auf einer antriebsseitige Welle angeordneten Ölförderrad gebildet sein kann, derart auszubilden, dass es das Kühl- und Schmieröl aus einem ÖLsumpf mit einem unterhalb der Kupplungsvorrichtung liegenden Ölspiegels zu fördern vermag. Die Kupplungsvorrichtung, also insbesondere auch die geschleppten Kupplungskomponenten, können sich so dauerhaft oberhalb des Ölspiegels befinden. Selbst von den abrollenden Antriebsrädern permanent geschleppte Komponenten verursachen bei geöffneter Kupplung, also bei abgeschaltetem Sekundärteil, keine Reibungsverluste, insbesondere keine Planschverluste oder Verluste aufgrund hydrodynamischer Effekte.

Bevorzugt weist die Ölfördereinrichtung ein Ölförderrad auf, das von einem auf der antriebsseitigen Welle angeordneten Tellerrad gebildet ist, über das als Bestandteil des Winkelgetriebes die von der Kardanwelle eingebrachte Antriebsleistung auf die in Bezug auf die Kupplungsvorrichtung antriebsseitige Welle übertragen wird. Insbesondere wenn aufgrund der Dimensionierung des Tellerrades das Tellerrad selbst nicht über einen ausreichenden Durchmesser verfügt, auch in einen unterhalb der Kupplungsvorrichtung liegenden Ölsumpf einzutauchen, es also insbesondere einen kleineren Durchmesser aufweist als der Außenlamellenträger der verwendete Kupplungsvorrichtung, kann vorgesehen sein, dass das Ölförderrad das auf der antriebsseitigen Welle angeordnete Tellerrad umfasst, wobei das Tellerrad radial nach außen erweitert ist, beispielsweise durch einen zusätzlich auf das Tellerrad aufgesetzten Ölförderring. Diese radiale Erweiterung kann als integraler, werkstoffeinstückiger Bestandteil des Tellerrades ausgebildet sein. Aus Gewichts- und Kostengründen und um zu beschleunigende und zu verzögernde Massen gering zu halten, bietet es sich jedoch an, die radiale Erweiterung, insbesondere den Ölförderring, als separates Bauteil aus einem leichteren Material zu fertigen und mit dem Tellerrad zu verbinden.

Die Realisierung des Ölförderrades unter Zuhilfenahme eines im Leistungsfluss stehenden Zahnrads des Ausgleichsgetriebes ist nicht zwingend erforderlich. Es kann auch ein vom Tellerrad separates Ölförderrad auf der Eingangswelle oder der Zwischenwelle vorgesehen sein.

Als Gegenstand der Erfindung wird auch die Verwendung einer Ölstaueinrichtung wie vorstehend und nachstehend beschrieben bei einer Kupplungsbaugruppe angesehen, die Teil einer differentiallosen oder differentialbehafteten kupplungsgesteuerten Ausgleichseinheit bildet, bei der die rotatorische Entkopplung der antriebsseitigen und abtriebsseitigen Welle für den Betrieb mit geöffneter Kupplung erforderlich ist. Mit einer solchen Ausgleichseinheit werden insbesondere Fahrzeuge ausgestattet, die über eine kupplungsgesteuerte, differentiallose Ausgleichseinheit anstelle eines herkömmlichen Differentials verfügen, und/oder solche, bei denen im sogenannten Disconnect-Betrieb eine nur wahlweise in den Antriebsleistungsfluss zuschaltbarer Sekundärteil des Antriebsstrangs für den wahlweisen Betrieb des Fahrzeugs mit Allradantrieb vorgesehen ist.

Bei einer Ausgleichseinheit, deren Bestandteil die Kupplungsbaugruppe bevorzugt ist, kann es sich sowohl um eine Quer- als auch um eine Längsausgleichseinheit handeln. Besonders bevorzugt wird die Erfindung jedoch bei einer Querausgleichseinheit eingesetzt, insbesondere bei einer differentiallosen, rein reibschlüssig wirkenden Querausgleichseinheit, bei der die Seitenwellen der Antriebsräder über Seitenwellenkupplungen in den Antriebsleistungsfluss eingekoppelt werden. Grundsätzlich ist die Erfindung aber auch bei herkömmlichen, formschlüssig wirkenden Längs- und Querdifferentialen einsetzbar, um Kupplungspakete der Differentialsperren zu beölen.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt
- Fig. 1: Antriebsstrangaufbau mit permanent angetriebenen Primärteil und einem nur im Bedarfsfall angetriebenen Sekundärteil sowie mit einer differantiallosen Ausgleichseinheit (Stand der Technik),
- Fig. 2: eine Teilansicht einer Kupplungsbaugruppe für einen Antriebsstrang gemäß Figur 1 im Schnitt, und
- Fig. 3: Einzelheit A aus Figur 2.

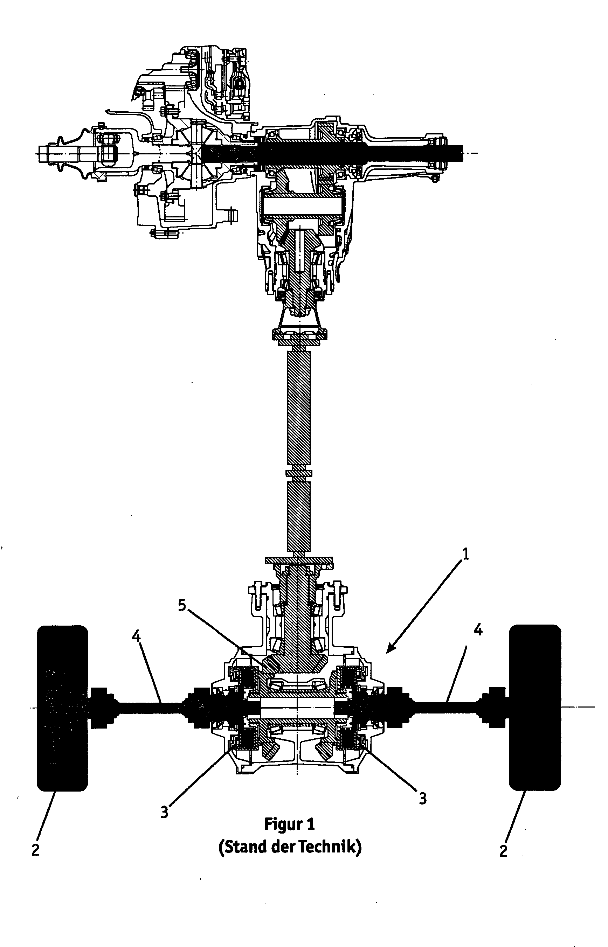

In Figur 1 ist ein aus dem Stand der Technik bekannter Antriebsstrangaufbau mit permanent angetriebenen Primärteil und einem nur im Bedarfsfall angetriebenen Sekundärteil mit einer differantiallosen Ausgleichseinheit 1 zum Antrieb der Sekundärantriebsräder 2 gezeigt. Der Sekundärteil des Antriebsstrangs, dessen Antriebsglieder vom Primärteil des Antriebsstrangs je nach Bedarfsfall abkoppelbar bzw. diesem zuschaltbar sind, sind schräg schraffiert gekennzeichnet, während diejenigen Antriebsglieder, die mit dem Sekundärteil im Fahrbetrieb zur Leistungsübertragung zusammenwirken und permanent rotieren, durchgehend schwarz gekennzeichnet sind. Der Sekundärteil des Antriebsstrangs soll nach erfolgter Entkopplung vom Primärteil des Antriebsstrangs vollkommen still stehen.

Die Ausgleichseinheit 1 ist eine differentiallose Ausgleichseinheit, bei der der Leistungsfluss über zwei individuell ansteuerbare Kupplungsvorrichtungen, gebildet durch Seitenwellenkupplungen 3, und über die Seitenwellen 4 auf die Sekundärantriebsräder 2 übertragen wird. Die Seitenwellenkupplungen 3, die von reibschlüssig wirkenden Lamellenkupplungen gebildet sind, gleichen dabei nicht nur die unterschiedlichen Abrollwege der Sekundärachsantriebsräder 2 bei Kurvenfahrten aus, sondern werden auch zur aktiven Beeinflussung des dynamischen Fahrverhaltens genutzt. Im Betrieb sind die Kupplungen mit Kühl- bzw. Schmieröl zu beölen.

Versuche mit dem in Figur 1 dargestellten System haben gezeigt, dass selbst dann, wenn der Sekundärteil des Antriebsstrangs vom Primärteil entkoppelt ist, insbesondere wenn dieser während der Fahrt und bei einer Geschwindigkeit ab ca. 50 km/h entkoppelt wird, die Antriebsglieder des Sekundärteils, also die in Bezug auf die Kupplungen 3 antriebsseitigen Antriebsglieder, nicht wunschgemäß stillstehen, sondern durch die von den Sekundärantriebsrädern 2 in die Seitenwellenkupplungen 3 eingebrachte Schleppleistung weiterrotieren und somit Verlustleistung verursachen. Dies liegt, wie eingangs beschrieben, insbesondere an dem im Stand der Technik gewählten Beölungskonzept und des hierfür erforderlichen Ölstandes, durch den die Seitenwellenkupplungen auch bei entkoppeltem Sekundärantriebsstrang dauerhaft im Öl stehen.

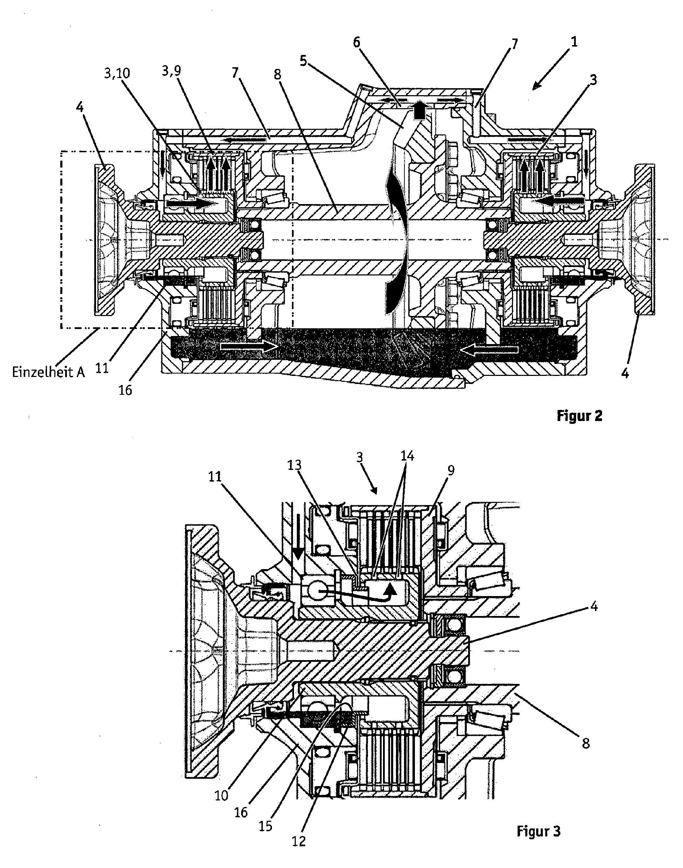

Figur 2 zeigt eine differentiallose Ausgleichseinheit 1, die insbesondere für den Einsatz bei einem Antriebsstrang wie in Figur 1 gezeigt vorgesehen ist, während des Betriebs mit einer von einem Tellerrad 5 gebildeten Ölfördereinrichtung zur Kupplungsbeölung. Das Tellerrad 5 schaufelt das Öl bei zugeschalteter Sekundärachse aufgrund seiner Rotation an der Gehäuseinnenwandung entlang zu einer im Gehäuse vorgesehenen Ölauffangtasche 6. Von dort aus gelangt es über Ölzuführungskanäle 7 zu den Seitenwellenkupplungen 3. Das Tellerrad 5 ist auf der Zwischenwelle 8 angeordnet und wird über eine Kardanwelle (nicht gezeigt) angetrieben.

Durch die Nutzung des Tellerrads 5 als Ölfördereinrichtung ist gegenüber einer Lösung, bei der die Lamellen der Seitenwellenkupplungen das Öl überwiegend selbst fördern, gewährleistet, dass das von den Kupplungen 3 zurückfließende Öl sich - bevor es erneut dem Ölkreislauf zugeführt wird - im Ölsumpf sammelt und mit dem gesamten Ölvolumen vermischt. Es wird verhindert, dass sich ein innerer Ölkreislauf ausbildet, auf grund dessen das Öl, nachdem es durch die Kupplungen hindurch geflossen ist, diesem wieder unmittelbar zuführt wird, so dass sich das Öl in der Folge überproportional erwärmen würde.

Außerdem ist in Figur 2 zu erkennen, dass der Ölspiegel im Ölsumpf, dargestellt durch die grau hinterlegte Fläche, sowohl im Betriebszustand als auch bei Stillstand unterhalb der Seitenwellenkupplungen 3 liegt. Auch dies trägt zur Vertustleistungsminimierung bei, da die von den Seitenwellen 4 geschleppten Kupplungsglieder nicht im Öl stehen und somit kein Öl zwischen die Kupplungslamellen fördern können. In dem Fall, dass der Sekundärteil des Antriebstrangs vom Primärteil entkoppelt ist, können die Kupplungen also vollständig trocken laufen und somit reibungsminimiert rotieren.

Figur 3 zeigt die in Figur 2 gekennzeichnete Einzelheit A. Über ein von einer Kardanwelle angetriebenes Kegelrad (nicht gezeigt) wird in an sich bekannter Weise ein auf einer Zwischenwelle 8 angeordnetes Tellerrad 5 (siehe Figur 2) angetrieben. Der zur Kupplungsvorrichtung 3 gehörende Außenlamellenträger 9, der die Eingangsseite der Kupplung 3 und daher ein antriebsseitiges Antriebsglied darstellt, ist drehfest mit der Zwischenwelle 8 verbunden, die ebenfalls ein antriebsseitiges Antriebsglied darstellt. Der Außenlammellenträger 9 überträgt die Antriebsleistung über die Außenlamellen der als Lamellenkupplung ausgebildeten Kupplungsvorrichtung 3 bei geschlossener Kupplung auf die Innenlamellen, über die die Antriebsleistung auf den Innenlamellenträger 10, der ein abtriebsseitiges Antriebsglied darstellt, weitergeleitet wird. Dieser ist wiederum mit einer Seitenwelle 4, einem weiteren abtriebsseitigen Antriebsglied, drehfest verbunden. Über die Seitenwelle 4 wird die Antriebsleistung, gegebenenfalls unter Zwischenschaltung weiterer Antriebsglieder, auf die Sekundärantriebsräder 2 weitergeleitet. Bei geöffneter Kupplung 3 werden keine Kräfte übertragen.

Wie Figur 2 und Figur 3 zeigen, ist im Bereich eines offenen Drehlagers 11, mit dem die abtriebsseitigen Antriebsglieder Innenlamellenträger 10 und Seitenwelle 4 in einem Gehäuse gelagert sind, eine Ölstaueinrichtung 12 in Form eines Ölstaurings vorgesehen.

Das Drehlager 11 ist als offenes Drehlager ausgeführt und, wie in Figur 2 und Figur 3 durch die den Ölfluss darstellenden Pfeile anschaulich zu sehen, in den Ölkreislauf integriert. Dies bedeutet, dass das von der Ölfördereinrichtung 5 geförderte Öl gezielt durch das offene Drehlager 11 hindurchgeführt wird. Der Innenlamellenträger 10 und die Seitenwelle 4 können in der Folge ohne spezielle konstruktive Vorkehrungen, die ein Hindurchfließen des Öls an einem geschlossenen Lager vorbei ermöglichen würden, ausgestaltet werden. Das offene Drehlager 11 wird bei zugeschalteter Sekundärachse, also bei Öl fördernder Ölfördereinrichtung 5, durch den laufenden Ölfluss geschmiert, während dieser Ölfluss bei entkoppelter Sekundärachse, also bei still stehenden in Bezug auf die Kupplungsvorrichtung antriebsseitigen Antriebsgliedern, unterbrochen ist. Die Ölstauvorrichtung 12 stellt sicher, dass auch im letztgenannten Fall dem Drehlager 11 ausreichend Öl zu dessen Schmierung zur Verfügung steht, in dem sie zusammen mit angrenzenden Bauteilen wie beispielsweise der Gehäuseinnenwandung und dem Radialwellendichtring einen Ölsumpf ausbildet. Das gestaute Öl ist durch die in Figur 2 und Figur 3 grau hinterlegte Fläche symbolisiert.

Der Querschnitt der Ölstaueinrichtung 12, die beispielhaft als Einpressbuchse ausgebildet ist und neben dem Drehlager 11 und nur durch einen zusätzlichen Sicherungsring vom Drehlager 11 beabstandet im Gehäuse gehalten ist, bewirkt durch seine Ausgestaltung in Form eines liegenden, mit seiner Staukante nach innen weisenden "L", dass die Schmierung des offenen Drehlagers 11 auch bei entkoppeltem Sekundärteil des Antriebsstrangs, bei dem die Ölfördereinrichtung 5 betriebszustandsbedingt still steht und kein Öl fördert, sichergestellt ist. Der Querschnitt der gezeigten Ölstaueinrichtung kann selbstverständlich variieren, solange er den gewünschten Ölstau gewährleistet. Die nach innen zur geometrischen Drehachse weisende Staukante kann auch eine weitere, nach außen in Richtung des Drehlagers 11 gerichtete Biegung oder einen entsprechenden Knick aufweisen, so dass gestautes Öl bei auftretenden Fliehkräfte besser im Ölsumpf gehalten werden kann.

Die Ölstaueinrichtung 12 dient außerdem als Ölleitblech. Sie ragt über den zwischen dem Gehäuse und dem Lamellentäger gebildeten Spalt 13 hinweg und führt damit das Öl bei zugeschalteter Sekundärachse zu Radialbohrungen 14, die in einem Steg des Lamellenträgers 10 vorgesehen sind. Damit wird das Öl dem Lamellenpaket gezielt zugeführt. Es kann sich optimal im Lamellenpaket verteilen und dringt insbesondere nicht oder nur in unwesentlichen Mengen in den besagten Spalt 13 ein, was dazu führen würde, dass ein zu großer Anteil des Öls am Lamellenpaket vorbei fließen oder sich schlecht verteilen würde und in der Folge nicht optimal an Kühlung und Schmierung des Lamellenpakets teilnehmen würde.

### Bezugszeichenliste

- 1: Ausgleicheinheit
- 2: Sekundärantriebsräder
- 3: Kupplungsvorrichtung, Seitenwellenkupplung
- 4: Seitenwellen
- 5: Ölfördereinrichtung, Tellerrad
- 6: Ölauffangtasche
- 7: Ölzuführungskanäle
- 8: Zwischenwelle
- 9: Außenlamellenträger
- 10: Innenlamellenträger
- 11: Drehlager
- 12: Ölstaueinrichtung, Ölstauring
- 13: Spalt
- 14: Radialbohrungen
- 15: Ölstaukante
- 16: Gehäuse

## Patentansprüche

1. Kupplungsbaugruppe eines Kraftfahrzeugs für die Weiterleitung von Antriebsleistung des Kraftfahrzeugs auf ein Rad (2) einer Achse, insbesondere kupplungsgesteuerte Ausgleichseinheit (1), mit einer schaltbaren Kupplungseinrichtung (3), die Antriebsleistung von einem in Bezug auf die Kupplungsvorrichtung (3) antriebsseitigen Antriebsglied (8, 9) auf eine in Bezug auf die Kupplungsvorrichtung (3) abtriebsseitigen Antriebsglied (4, 10) zu übertragen vermag, wobei eine Ölfördereinrichtung (5) vorgesehen ist, die betriebszustandsabhängig Öl fördert, **dadurch gekennzeichnet, dass** eine Ölstauvorrichtung (12) vorgesehen ist, die die Schmierung von in Bezug auf die Kupplungsvorrichtung (3) abtriebsseitig angeordneten Bauteilen bei nicht fördernder Ölfördereinrichtung (5) sicherzustellen vermag.

2. Kupplungsbaugruppe nach Anspruch 1, **dadurch gekennzeichnet, dass** ein Drehlager (11) vorgesehen ist, dem eine Ölstauvorrichtung (12) zugeordnet ist, die die Schmierung des Drehlagers (11) bei nicht fördernder Ölfördereinrichtung (5) sicherzustellen vermag

3. Kupplungsbaugruppe nach dem vorhergehenden Anspruch, **dadurch gekennzeichnet, dass** Drehlager (11) ein offenes Drehlager ist und der Ölfluss des ÖlkreisLaufs durch das offene Drehlager geführt ist.

4. Kupplungsbaugruppe nach einem der Ansprüche 2 bis 4 **dadurch gekennzeichnet, dass** die Ölstauvorrichtung (12) mit angrenzenden Bauteilen, insbesondere mit Teilen der Innenwandung eines Gehäuses (16), in dem die abtriebsseitigen Antriebsglieder mittels des Drehlagers (11) gelagert sind, einen Ölsumpf ausbildet, in dem das Drehlager (11) läuft.

5. Kupplungsbaugruppe nach einem der vorhergehenden Ansprüche, **dadurch gekennzeichnet, dass** die Ölstauvorrichtung (12) eine Ölstaukante (15) aufweist, deren Höhe derart bemessen ist, dass der Ölstand des Ölsumpfes die ausreichende Schmierung des Drehlagers (11) auch bei stillgelegter Ölfördereinrichtung sicherstellt.

6. Kupplungsbaugruppe nach einem der vorhergehenden Ansprüche, **dadurch gekennzeichnet, dass** die Ölstauvorrichtung (12) von einem Ölstauring gebildet ist.

7. Kupplungsbaugruppe nach einem der vorhergehenden Ansprüche, **dadurch gekennzeichnet, dass** die Ölstaueinrichtung (12) einen L-förmigen Querschnitt auf weist.

8. Kupplungsbaugruppe nach einem der vorhergehenden Ansprüche, **dadurch gekennzeichnet, dass** die Ölstaueinrichtung (12) von einer Einpressbuchse gebildet ist.

9. Kupplungsbaugruppe nach einem der vorhergehenden Ansprüche, **dadurch gekennzeichnet, dass** die Ölstauvorrichtung (12) einen zwischen Teilen der Kupplungsvorrichtung (3) und einem Gehäuse (16) vorhandenen Spalt (13) überbrückt.

10. Kupplungsbaugruppe nach einem der vorhergehenden Ansprüche, **dadurch gekennzeichnet, dass** die Ölfördereinrichtung (12) von einem von der Kupplungsvorrichtung (3) entfernt angeordneten Ölförderrad (5) gebildet ist.

11. Kupplungsbaugruppe nach einem der vorhergehenden Ansprüche, **dadurch gekennzeichnet, dass** die Ölfördereinrichtung (12) an ein in Bezug auf die Kupplungseinrichtung (3) antriebsseitiges Antriebsglied gekoppelt ist, insbesondere an eine in Bezug auf die Kupplungsvorrichtung (3) antriebsseitig angeordnete Zwischenwelle (8), die als Welle eines Winkelgetriebes ein Tellerrad (5) trägt, wobei das Tellerrad (5) als Ölförderrad eingesetzt ist.

12. Kupplungsbaugruppe nach einem der beiden vorhergehenden Ansprüche, **dadurch gekennzeichnet, dass** das Ölförderrad (5) derart ausgebildet ist, dass es das Öl aus einem Ölsumpf mit einem unterhalb der Kupplungsvorrichtung (3) liegenden Ölspiegel zu fördern vermag.

13. Verwendung einer Ölstaueinrichtung (12) für eine Kupplungsbaugruppe nach einem der vorhergehenden Ansprüche, wobei die Kupplungsbaugruppe eine betriebszustandsabhängig fördernde Ölfördereinrichtung (5) aufweist, und wobei mittels der Ölstauvorrichtung (12) bei nicht fördernder Ölfördereinrichtung (5) ein Ölsumpf zur Sicherstellung der Schmierung eines offenen Drehlagers (11) geschaffen ist, das in einen die Kupplungsbaugruppe bedienenden Ölkreislauf integriert ist und von dem Öl bei fördernder Ölfördereinrichtung (12) durchflossen wird.

## Claims

1. A clutch assembly of a motor vehicle for transmitting drive power of the motor vehicle to a wheel (2) of an axle, in particular a clutch-controlled equalisation unit (1), having a clutch device (3), which can be engaged and disengaged and can transmit drive power from a drive member (8, 9) which is on the drive side in relation to the clutch device (3) to a drive member (4, 10) which is on the output side in relation to the clutch device (3), wherein an oil-delivering device (5) is provided, which delivers oil depending on the operating state, **characterised in that** an oil-damming device (12) is provided, which can ensure lubrication of components arranged on the output side in relation to the clutch device (3) when the oil-delivering device (5) does not deliver.

2. The clutch assembly according to Claim 1, **characterised in that** a rotary bearing (11) is provided, which is assigned an oil-damming device (12), which can ensure lubrication of the rotary bearing (11) when the oil-delivering device (5) does not deliver.

3. The clutch assembly according to the preceding claim, **characterised in that** the rotary bearing (11) is an open rotary bearing, and the oil flow of the oil circuit is guided through the open rotary bearing.

4. The clutch assembly according to any one of Claims 2 to 4, **characterised in that** the oil-damming device (12), together with adjacent components, in particular with parts of the inner walls of a housing (16) in which the output-side drive members are mounted by means of the rotary bearing (11), forms an oil sump in which the rotary bearing (11) runs.

5. The clutch assembly according to any one of the preceding claims, **characterised in that** the oil-damming device (12) has an oil-damming edge (15), the height of which is dimensioned such that the oil level of the oil sump ensures sufficient lubrication of the rotary bearing (11) even when the oil-delivering device is not operating.

6. The clutch assembly according to any one of the preceding claims, **characterised in that** the oil-damming device (12) is formed by an oil-damming ring.

7. The clutch assembly according to any one of the preceding claims, **characterised in that** the oil-damming device (12) has an L-shaped cross section.

8. The clutch assembly according to any one of the preceding claims, **characterised in that** the oil-damming device (12) is formed by a press-fit bush.

9. The clutch assembly according to any one of the preceding claims, **characterised in that** the oil-damming device (12) bridges a gap (13) present between parts of the clutch device (3) and a housing (16).

10. The clutch assembly according to any one of the preceding claims, **characterised in that** the oil-delivering device (12) is formed by an oil-delivering wheel (5), which is arranged at a distance from the clutch device (3).

11. The clutch assembly according to any one of the preceding claims, **characterised in that** the oil-delivering device (12) is coupled to a drive member which is on the drive side in relation to the clutch device (3), in particular to an intermediate shaft (8), which is arranged on the drive side in relation to the clutch device (3) and bears a crown wheel (5) as the shaft of an angular gear, wherein the crown wheel (5) is used as the oil-delivering wheel.

12. The clutch assembly according to any one of the two preceding claims, **characterised in that** the oil-delivering wheel (5) is formed in such a manner that it can deliver the oil out of an oil sump with an oil level lying below the clutch device (3).

13. The use of an oil-damming device (12) for a clutch assembly according to any one of the preceding claims, wherein the clutch assembly has an oil-delivering device (5), which delivers depending on the operating state, and wherein an oil sump for ensuring lubrication of an open rotary bearing (11) is created by means of the oil-damming device (12) when the oil-delivering device (5) does not deliver, which oil sump is integrated in an oil circuit serving the clutch assembly and through which oil flows when the oil-delivering device (12) delivers.

## Revendications

1. Module d'accouplement d'un véhicule automobile en vue de la transmission de la puissance d'entraînement du véhicule sur une roue (2) d'un axe, notamment une unité de compensation (1) commandée par accouplement, comportant un dispositif d'accouplement (3) commutable, qui peut transmettre la puissance d'entraînement d'un organe de transmission (8, 9) du côté d'entraînement par rapport au dispositif d'accouplement (3) sur un organe de transmission (4,10) du côté de sortie par rapport au dispositif d'accouplement (3), dans lequel un dispositif de transport d'huile (5) est prévu, qui transporte de l'huile en fonction de l'état de fonctionnement, **caractérisé en ce que** un dispositif d'engorgement d'huile (12) est prévu, qui peut garantir la lubrification des composants disposés du côté de sortie par rapport au dispositif d'accouplement (3) lorsque le dispositif de transport d'huile (5) n'effectue aps de transport.

2. Module d'accouplement selon la revendication 1, **caractérisé en ce que** un palier rotatif (11) est prévu, auquel un dispositif d'engorgement d'huile (12) est coordonné, qui peut garantir la lubrification du palier rotatif (11) lorsque le dispositif de transport d'huile (5) n'effectue pas de transport.

3. Module d'accouplement selon la revendication précédente, **caractérisé en ce que** le palier rotatif (11) est un palier rotatif ouvert et l'écoulement d'huile du circuit d'huile est guidé à travers le palier rotatif ouvert.

4. Module d'accouplement selon une des revendications 2 à 4, **caractérisé en ce que** le dispositif d'engorgement d'huile (12) avec les pièces contiguës, notamment avec les parties de la paroi intérieur d'un logement (16), dans lequel les organes d'entraînement du côté de sortie sont positionnées au moyen du palier rotatif (11), constitue un carter d'huile, dans lequel se trouve le palier rotatif (11).

5. Module d'accouplement selon une des revendications précédentes, **caractérisé en ce que** le dispositif d'engorgement d'huile (12) présente une arête d'engorgement d'huile (15), dont la hauteur est proportionnée de telle sorte que le niveau d'huile du carter d'huile garantisse la lubrification suffisante du palier rotatif (15) également lorsque le dispositif de transport d'huile est à l'arrêt.

6. Module d'accouplement selon une des revendications précédentes, **caractérisé en ce que** le dispositif d'engorgement d'huile (12) est formé par une bague d'engorgement d'huile.

7. Module d'accouplement selon une des revendications précédentes, **caractérisé en ce que** le dispositif d'engorgement d'huile (12) présente une section transversale en forme de L.

8. Module d'accouplement selon une des revendications précédentes, **caractérisé en ce que** le dispositif d'engorgement d'huile (12) est formé par une douille forcée.

9. Module d'accouplement selon une des revendications précédentes, **caractérisé en ce que** le dispositif d'engorgement d'huile (12) enjambe un interstice (13) prévu entre des parties du dispositif d'accouplement (3) et un logement (16).

10. Module d'accouplement selon une des revendications précédentes, **caractérisé en ce que** le dispositif de transport d'huile (12) est formé par une roue de transport d'huile (5) disposée à distance du dispositif d'accouplement (3).

11. Module d'accouplement selon une des revendications précédentes, **caractérisé en ce que** le dispositif de transport d'huile (12) est couplé à un organe d'entraînement du côté d'entraînement par rapport au dispositif d'accouplement (3), notamment à un arbre intermédiaire (8) disposé du côté d'entraînement par rapport au dispositif d'accouplement (3), qui supporte comme arbre d'un engrenage angulaire une couronne (5), dans lequel la couronne (5) est employée en tant que roue de transport d'huile.

12. Module d'accouplement selon une des deux revendications précédentes, **caractérisé en ce que** la roue de transport d'huile (5) est conçue de telle sorte qu'elle puisse transporter l'huile provenant d'un carter d'huile avec un niveau d'huile situé audessous du dispositif d'accouplement (3).

13. Utilisation d'un dispositif d'engorgement d'huile (12) pour un module d'accouplement selon une des revendications précédentes, dans laquelle le module d'accouplement présente un dispositif de transport d'huile (5)effectuant un transport en fonction d'états de fonctionnement, et dans laquelle au moyen du dispositif d'engorgement d'huile (12) lorsque le dispositif d'engorgement d'huile (5) n'effectue pas de transport un carter d'huile pour garantir la lubrification d'un palier rotatif ouvert (11) est créé, qui est intégré dans un circuit d'huile desservant le module d'accouplement et qui est traversé par l'huile lorsque le dispositif de transport d'huile (12) n'effectue pas de transport.
